# EUROPÄISCHE PATENTSCHRIFT

(11) **EP 1 841 984 B1**
(45) Veröffentlichungstag und Bekanntmachung des Hinweises auf die Patenterteilung: **22.12.2010**
(21) Anmeldenummer: 05790322.1
(22) Anmeldetag: 06.10.2005
(51) Int. Cl.: F16H 3/00

(54) **DOPPELKUPPLUNGSGETRIEBE**
DOUBLE CLUTCH GEARBOX
BOITE DE VITESSES A DOUBLE EMBRAYAGE

(30) Priorität: 13.10.2004 DE 102004049832
(43) Veröffentlichungstag der Anmeldung: 10.10.2007
(73) Patentinhaber: Daimler AG, 70327 Stuttgart (DE)
(72) Erfinder: RÜDLE, Harald, 70376 Stuttgart (DE)
(74) Vertreter: JENSEN & SON
(86) Internationale Anmeldenummer: PCT/EP2005/010751
(87) Internationale Veröffentlichungsnummer: WO 2006/040060

(56) Entgegenhaltungen:
- WO-A-2005/068875
- DE-A1- 3 427 226
- FR-A- 2 589 214
- GB-A- 2 103 317
- US-A- 4 738 149
- US-A- 4 799 395
- US-A1- 2001 042 416
- PATENT ABSTRACTS OF JAPAN Bd. 014, Nr. 447 (M-1029), 25. September 1990 (1990-09-25) -& JP 02 176237 A (MITSUBISHI MOTORS CORP), 9. Juli 1990 (1990-07-09)
- PATENT ABSTRACTS OF JAPAN Bd. 1996, Nr. 07, 31. Juli 1996 (1996-07-31) -& JP 08 074949 A (TOYOTA MOTOR CORP), 19. März 1996 (1996-03-19)

## Beschreibung

Die Erfindung betrifft ein Doppelkupplungsgetriebe gemäß dem einteiligen Patentanspruch 1. US 738 149 A offenbart ein Getriebe mit den Merkmale des Oberbegriffes des Anspruchs 1.

Die nicht vorveröffentlichte DE 10 2004 043 939.7 zeigt bereits ein Doppelkupplungsgetriebe, dass axial nur wenig Bauraum beansprucht.

Aus der EP 1 013 965 A2 ist ferner ein Doppelkupplungsgetriebe mit zwei parallel beabstandeten Vorgelegewellen bekannt.

Ferner ist aus der DE 196 24 857 A1 ein Doppelkupplungsgetriebe bekannt, das axial nur wenig Bauraum beansprucht.

Aufgabe der Erfindung ist es, ein möglichst kleines Doppelkupplungsgetriebe für frontgetriebene Fahrzeuge zu schaffen.

Diese Aufgabe wird erfindungsgemäß mit den Merkmalen von Patentanspruch 1 gelöst.

Ein Doppelkupplungsgetriebe findet besonders vorteilhaft Anwendung bei einem frontangetriebenen Fahrzeug, da ein solches Fahrzeug zur Sicherstellung eines großen Radeinschlagswinkels ein geringeres Drehmomente als ein heckangetriebenes Fahrzeug überträgt, wobei Doppelkupplungsgetriebe eine geringere Drehomentübertragungsfähigkeit und einen besseren Wirkungsgrad als Planetenautomatikgetriebe aufweisen.

Ein Vorteil der Erfindung ist die Nutzung mehrer Zahnräder der Vorwärtsgänge für den Rückwärtsgang. Dabei wird auf ein sonst übliches Zwischenrad zur Drehrichtungsumkehr verzichtet.

Der Leistungsfluss des Rückwärtsganges fließt von der einen Hauptwelle über Zahnräder beiden Vorgelegewellen und die zweite Hauptwelle. Dabei liegen im Leistungsfluss auf jeder dieser drei Wellen jeweils zwei Zahnräder. Die beiden Zahnräder der einen Vorgelegewelle sind drehbar zueinander, d.h. Losräder. Die beiden Zahnräder der anderen Vorgelegewelle sind hingegen drehfest gekoppelt. Die beiden Zahnräder der zweiten Hauptwelle sind beides Festräder, die definitionsgemäß drehfest mit der gemeinsamen Hauptwelle sind. Da sich der Durchmesser der beiden beteiligten Zahnräder pro Welle unterscheiden kann, ermöglicht dies einen sehr großen Spielraum bei der Bauraumausnutzung. Beispielsweise kann das Getriebe auf eine extreme Untersetzung des Rückwärtsganges optimiert werden, indem bei sämtlichen drei Wellen das Eingangszahnrad einen kleineren Durchmesser als das Ausgangszahnrad hat, wobei das Ausgangszahnrad wiederum auf ein relativ großes Zahnrad der nächsten Welle bzw. des Differential abtreibt. Außer dieser vornehmlich für Sonderfahrzeuge relevanten extremen Auslegung sind auch bauraumoptimale Auslegungen möglich, wie dies auch im Ausführungsbeispiel dargestellt ist. Diese bauraumoptimale Auslegung bezieht sich hinsichtlich der Übersetzungsverhältnisse auf den radialen Bauraum und hinsichtlich der Radsatzanordnung auf den axialen Bauraum.

Die mit der hohen Anzahl von Zahnradstufen bzw. Verzahnungseingriffen einhergehende Verschlechterung des Wirkungsgrades ist im Rückwärtsgang nur von untergeordneter Bedeutung, da die Fahrt im Rückwärtsgang üblicherweise einen geringen Gesamtfahrtstreckenanteil ausmacht.

Insbesondere sind zwei unterschiedliche Zahnradsätze ermöglicht, die nach dem Baukaustensystem die alternative Produktion von Sechs-Gang-Getrieben und Sieben-Gang-Getrieben bei nur geringem baulichen Unterschied ermöglicht. D.h. es kann in vorteilhafter Weise eine große Anzahl von Gleichteilen Verwendung finden.

In besonders vorteilhafter Weise können die beiden Vorgelegewellen jeweils ein drehfestes Abtriebsritzel aufweisen, das insbesondere am Ende der jeweiligen Vorgelegewelle angeordnet sein kann. Diese beiden drehfesten Abtriebsritzel kämmen mit einem Differentialzahnrad welches einen Planetenradsatz antreibt, der insbesondere als Kegelradsatz ausgeführt sein kann. Die beiden Abtriebsritzel können zur Erhöhung des Auslegungsspielraumes bei der Optimierung zwischen Bauraum und Getriebeübersetzungen der Gänge einen unterschiedlichen Durchmesser aufweisen.

In besonders vorteilhafter Weise ist das Doppelkupplungsgetriebe sequentiell zugkraftunterbrechungfrei schaltbar, was insbesondere in den unteren Getriebegängen vom Fahrer positiv wahrgenommen wird. Zur vollständigen sequentiellen zugkraftunterbrechungfreien Schaltbarkeit folgen die geraden Gänge im Leistungsfluss der einen Hauptkupplung und die ungeraden Gänge der anderen
Hauptkupplung. Der Rückwärtsgang ist dabei der Hauptkupplung zugeordnet, die nicht in dem Leistungsfluss der Hauptkupplung liegt, welche dem ersten Vorwärtsgang zugeordnet ist. Damit kann das Umschalten zwischen dem ersten Vorwärts- und dem ersten Rückwärts-Gang allein durch wechselweises Schließen der beiden Kupplungen des Doppelkupplungsgetriebes erfolgen, ohne dass dabei eine Schaltmuffe betätigt werden muss. Dies ist besonders günstig im Hinblick auf kurze Übergangszeiten vom Rückwärtsgang in den ersten Vorwärtsgang, die neben dem Rangieren beispielsweise für ein "Freischaukeln" des festgefahrenen Fahrzeuges vorteilhaft sind. Beim "Freischaukeln" bzw. "rocking-cycle" wird das Fahrzeug kurz vor- und zurückgefahren, um mit Schwung beispielsweise aus einer Sandkuhle zu kommen. Demzufolge wird die Trägheit der Fahrzeug- und Beladungsmasse genutzt, um den eventuell schlecht greifenden Antrieb der Antriebsräder zu unterstützen. In diesem Zusammenhang erweist sich ein Doppelkupplungsgetriebe als besonders vorteilhaft, da dieses vollautomatisch ausgestaltet sein kann. Demzufolge kann auch ein vollautomatischer "Freischaukelbetrieb" vorgesehen sein. Zusätzlich kann neben der vollautomatischen Betriebsweise auch die halbautomatisch Betriebsweise vorgesehen sein, bei welcher der Gangwechsel vom Fahrzeugführer direkt vorgegeben wird. Dieser Gangwechsel wird dann selbsttätig ausgeführt, wenn entsprechende Randbedingungen erfüllt sind. Diese Randbedingungen sind beispielsweise
- die Einhaltung der maximal und der minimal zulässige Antriebsmotordrehzahl,
- ein Fahrzeugstabilitätsprogramm, wie beispielsweise ein elektronisches Stabilitätsprogramm ESP oder ein Antiblockiersystem ABS oder eine Antischlupfregelung ASR ist inaktiv.

Eine Gangwechselkupplung kann in besonders vorteilhafter Weise gemäß der Deutschen Patentanmeldung mit dem internen Aktenzeichen P805931/DE/1 der Anmelderin ausgeführt sein, deren Inhalt diesbezüglich auf im Inhalt dieser Anmeldung als aufgenommen gelten soll. Dabei stellt eine Schaltmuffe der Gangwechselkupplung eine drehfeste Verbindung zu einem von zwei alternativ möglichen Losrädern her. Die Gangwechselkupplung liegt axial zwischen den beiden drehfest mit der Welle - insbesondere der Vorgelegewelle - zu koppelnden Losrädern. Dabei liegt zwischen dem einen zu koppelnden Losrad und der Schaltmuffe noch ein weiteres Losrad, welches ebenfalls drehfest mit diesem Losrad und der Welle koppelbar ist. Diese beiden drehfest miteinander und der Vorgelegewelle koppelbaren Losräder können insbesondere zwei im Leistungsfluss des Rückwärtsganges liegende Losräder sein. Insbesondere können diese beiden Losräder auf der bezüglich des Rückwärtsganges eingangsseitigen Vorgelegewelle angeordnet sein.

Das erfindungsgemäße Doppelkupplungsgetriebe kann in besonders vorteilhafter Weise progressiv oder zumindest näherungsweise progressiv abgestuft sein.

Weitere Vorteile der Erfindung gehen aus den weiteren Patentansprüchen, der Beschreibung und der Zeichnung vor.

Die Erfindung ist nachfolgend anhand eines Ausführungsbeispiels näher erläutert.

Dabei zeigen:
- Fig. 1: schematisch ein Doppelkupplungsgetriebe mit sieben Vorwärtsgängen und einem Rückwärtsgang,
- Fig. 2: das Doppelkupplungsgetriebe aus Fig. 1 in einer detaillierten Konstruktionszeichnung und
- Fig. 3: in einem Detail eine Gangwechselkupplung aus Fig. 1.

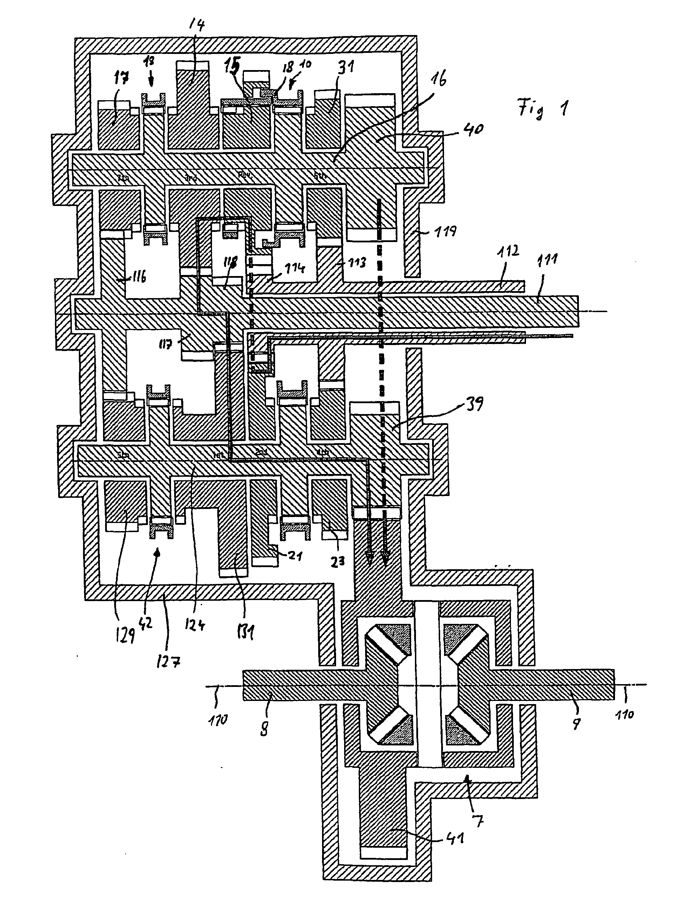

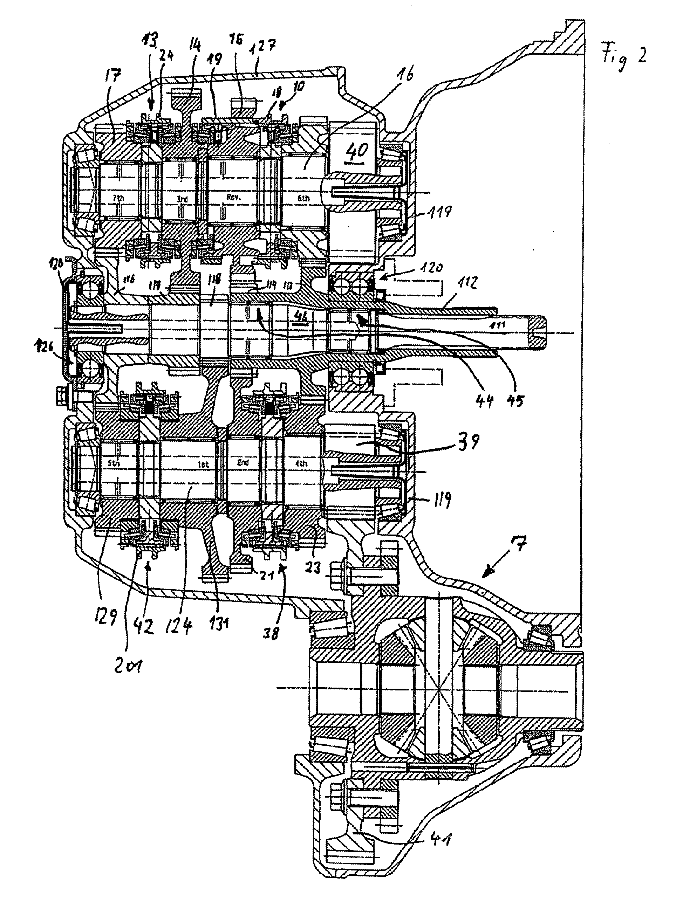

Fig. 1 und Fig. 2 zeigen ein Doppelkupplungsgetriebe mit sieben Vorwärtsgängen 1st, 2nd, 3rd, 4th, 5th, 6th, 7th und einem Rückwärtsgang Rev.

Im Folgenden wird auf Fig. 1 und Fig. 2 Bezug genommen, wobei technisch konstruktive Details teilweise nur in Fig. 2 ersichtlich sind, wohingegen Fig. 1 einen besseren Überblick über die funktionalen Zusammenhänge des Getrieberadsatzes bietet. Gezeigt ist ein Doppelkupplungsgetriebe in frontquer-Bauweise. In der Zeichnungsebene liegt ein verbrennungsmotorischer Antriebsmotor dabei rechts. Ein Differential 7 mitsamt seinen Radantriebshalbwellen 8, 9 zum Abtrieb auf eine Vorderachse 110 liegt in der Zeichnungsebene unten. Die dargestellten Getriebewellen sind dabei nur zur Vereinfachung in einer Zeichnungsebene dargestellt. In der praktischen Umsetzung sind die vier geometrischen Hauptachsen räumlich parallel versetzt zueinander.

Das Doppelkupplungsgetriebe weist eingangsseitige Hauptwellen auf, von denen
- die eine als radial innere Innenwelle 111 und
- die andere als radial letztere in einem axial rechten

Teilbereich umschließende äußere Hohlwelle 112 ausgeführt ist.

Am rechten bzw. dem Antriebsmotor nahe stehenden Ende der beiden Getriebeeingangswellen liegen die beiden nicht näher dargestellten Hauptkupplungen der Doppelkupplung. Jede der beiden Hauptkupplungen ist in nicht näher dargestellter Weise unabhängig von der jeweils anderen Hauptkupplung reibschlüssig mit dem Antriebsmotor kuppelbar. Zwischen der Doppelkupplung und den auf den beiden Getriebeeingangswellen aufgereihten Zahnrädern liegt eine Trennwand 119, an welcher die Hohlwelle 112 mittels einer Wälzlagerung 120 axial abgestützt und radial gelagert ist. Die Wälzlagerung 120 ist als abgedichtetes doppelreihiges Rillenkugellager ausgeführt. Die Trennwand 119 erstreckt sich radial außen nach rechts und bildet somit eine Kupplungsglocke zur Aufnahme der Doppelkupplung.

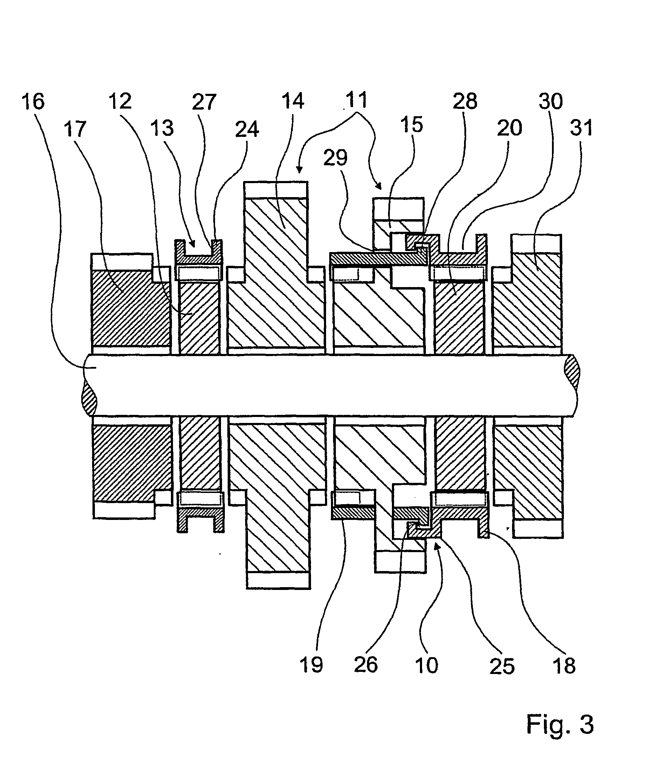

Mit von rechts nach links abnehmenden Durchmesser sind zwei axial aufeinander folgende Festräder 113, 114 drehfest mit der Hohlwelle 112 verbunden. Die beiden Festräder 113, 114 sind dabei einteilig mit der Hohlwelle 112. Ein Absatz des Festrades 113 liegt am doppelreihigen Rillenkugellager 120 axial an. Auf der dem Antriebsmotor zugewandten Seite ist ein ebenfalls am Rillenkugellager 120 anliegender Sicherungsring in eine Ringnut der Hohlwelle 112 eingesetzt. Das erste Festrad 114 ist dem zweiten Vorwärtsgang 2nd zugeordnet und kämmt mit einem Losrad 21, welches auf einer unteren Vorgelegewelle 124 angeordnet ist. Dieses Losrad 21 kämmt ferner mit einem Losrad 15, welches dem Rückwärtsgang Rev zugeordnet ist. Dieses Losrad 15 und die zugehörige Gangwechselkupplung 10 sind näher in Fig. 3 nebst Beschreibung erläutert. Das zweite Festrad 113 auf der Hohlwelle 112 ist dem vierten Vorwärtsgang 4th zugeordnet und kämmt mit einem Losrad 23, welches auf der unteren Vorgelegewelle 124 angeordnet ist. Ferner ist das zweite Festrad 113 dem sechsten Vorwärtsgang 6th zugeordnet und kämmt mit einem Losrad 31, welches auf der oberen Vorgelegewelle 16 angeordnet ist.

Die beiden Vorgelegewellen 16, 124 sind an deren beiden Enden jeweils zapfenförmig ausgebildet und mittels Kegelrollenlagern in X-Anordnung gegenüber einem dreigeteilten Getriebegehäuse gelagert, welches aus
- der besagten Trennwand 119 mit der integralen Kupplungsglocke,
- einem Radsatzgehäuse 127 und
- einem Hauptwellendeckel 128
besteht.

Die Innenwelle 111 ragt aus der umgebenden Hohlwelle 112 axial heraus. Auf dem herausragenden Bereich der Innenwelle 111 sind die drei Festräder 116, 117, 118 angeordnet. Diese drei Festräder 116, 117, 118 nehmen von einem linken Ende der Innenwelle 111 in die nach rechts weisende Richtung vom Durchmesser her ab. Am äußersten linken Ende ist die Innenwelle 111 mittels eines als abgedichtetes Rillenkugellager ausgeführtes Wälzlagers 126 in dem Radsatzgehäuse 127 gelagert. Dieses Radsatzgehäuse 127 ist als separates Teil zu der zuvor genannten Trennwand 119 ausgeführt.

Das vom Durchmesser größte Festrad 116 dieser drei Festräder 116, 117, 118 der Innenwelle 111 ist dem fünften Vorwärtsgang 5th zugeordnet und kämmt mit einem Losrad 129 der unteren Vorgelegewelle 124. Ferner kämmt das größte Festrad 116 mit einem Losrad 17 der oberen Vorgelegewelle 16. Letzteres Losrad 17 ist dem siebenten Vorwärtsgang 7th zugeordnet. Damit kämmen das größte Festrad 116 und die beiden Losräder 129, 17 in einer Zahnradebene. Das vom Durchmesser mittlere Festrad 117 dieser drei Festräder 116, 117, 118 der Innenwelle 111 ist dem dritten Vorwärtsgang 3rd zugeordnet und kämmt mit einem Losrad 14 der oberen Vorgelegewelle 16. In der Zahnradebene dieses Losrades 14 liegt kein Zahnrad der unteren Vorgelegewelle 124. Das vom Durchmesser kleinste Festrad 118 dieser drei Festräder 116, 117, 118 der Innenwelle 111 ist dem ersten Vorwärtsgang 1st zugeordnet und kämmt mit einem Losrad 131 auf der unteren Vorgelegewelle 124.

Rechts neben dem Losrad 21, welches dem zweiten Vorwärtsgang 2nd zugeordnet ist, liegt eine Gangwechselkupplung 38 koaxial zur unteren Vorgelegewelle 124. Mit dieser Gangwechselkupplung 38 ist das zuvor genannte Losrad 21 mit der Vorgelegewelle 124 drehfest koppelbar, so dass ein Drehmoment auf ein am rechten Ende vor dem Kegelrollenlager liegendes kleines Abtriebsritzel 39 übertragbar ist.

Dieses kleine Abtriebsritzel 39 und ein großes Abtriebsritzel 40, welches am rechten Ende der oberen Vorgelegewelle 16 vor deren Kegelrollenlager liegt, kämmen beide mit einem stirnverzahnten Antriebszahnrad 41 des Differentials 7.

Die Gangwechselkupplung 38 ist ferner mit dem Losrad 23 koppelbar, so dass zum Einlegen des vierten Vorwärtsganges 4th eine drehfeste Verbindung zwischen der unteren Vorgelegewelle 124 und dem Losrad 23 herstellbar ist.

Auf der selben Vorgelegewelle 124 ist eine weitere Gangwechselkupplung 42 axial zwischen den beiden Losrädern 129, 131 vorgesehen, mit welcher alternativ eines der beiden Losräder 129, 131 mit der unteren Vorgelegewelle 124 drehfest koppelbar ist, so dass der fünfte Vorwärtsgang 5th oder alternativ der erste Vorwärtsgang 1st eingelegt ist.

Koaxial auf der anderen Vorgelegewelle 16 liegt eine Gangwechselkupplung 13 zwischen den beiden Losrädern 17, 14, welche dem siebenten Vorwärtsgang 7th und dem dritten Vorwärtsgang 3dr zugeordnet sind. Alternativ ist mit dieser Gangwechselkupplung 13 das Losrad 17 und das Losrad 14 mit der Vorgelegewelle 16 drehfest kuppelbar.

Dem Rückwärtsgang Rev und dem sechsten Vorwärtsgang 6th ist noch eine weitere zu Fig. 3 näher beschriebene Gangwechselkupplung 10 zugeordnet.

Die Innenwelle 111 ist mittels zwei zweireihigen Nadellagern 44, 45 innerhalb der Hohlwelle 112 wälzgelagert abgestützt. Axial zwischen den beiden Nadellagern 44, 45 liegt ein konischer Bereich 46. In die Innenwelle 111 ist vom linken Ende her eine Sacklochbohrung eingebohrt, die axial vor und nach dem konischen Bereich 46 mit Querbohrungen an den Nadellagern 44, 45 versehen ist. Diese Querbohrungen versorgen die beiden Nadellager 44, 45 mit Schmier- und Kühlmittel. Zur Zuführung des Schmier- und Kühlmittel in die Sacklochbohrung ragt eine Einführhülse in einen Eingangsbereich der Sacklochbohrung. Diese Einführhülse ist in deren Bereich außerhalb der Sacklochbohrung mit einem tellerförmig nach radial nach außen tiefgezogenem Blech versehen. Dieses tiefgezogene Blech ist an den besagten einem Hauptwellendeckel 128 angeformt, der als relativ dickes Blechteil ausgeformt ist und ein Lagerauge zur Aufnahme des Wälzlagers 126 im Radsatzgehäuse 127 verschließt. Zum Verschließen ist eine Verschraubung vorgesehen.

Die beiden Vorgelegewellen 16, 124 verfügen an deren beiden rechten Enden ebenfalls über ähnliche Schmiermittelzuführungen. Diese sind jedoch unmittelbar in Lageraugen der Trennwand 119 eingesetzt. Ferner sind die beiden Vorgelegewellen 16, 124 mit zentralen Bohrungen und Querbohrungen zur Schmiermittelversorgung insbesondere der Nadellager der Losräder aber auch der Zahnreingriffe versehen.

Damit ist beim Doppelkupplungsgetriebe eine Antriebsleistung
- im einzigen Rückwärtsgang Rev von der zweiten Hauptkupplung,
- im ersten Vorwärtsgang 1st von der ersten Hauptkupplung,
- im zweiten Vorwärtsgang 2nd von der zweiten Hauptkupplung,
- im dritten Vorwärtsgang 3rd von der ersten Hauptkupplung,
- im vierten Vorwärtsgang 4th von der zweiten Hauptkupplung,
- im fünften Vorwärtsgang 5th von der ersten Hauptkupplung,
- im sechsten Vorwärtsgang 6th von der zweiten Hauptkupplung und
- im siebenten Vorwärtsgang 7th von der ersten Hauptkupplung
auf das Differential 7 bzw. die Vorderachse 10 übertragbar. D.h. jeder Gang ist zu seinem sequentiell benachbarten Gang lastschaltbar, da ein Gangwechsel einen Wechsel der Hauptkupplung bedeutet.

Um den Rückwärtsgang Rev. vor dem Einrücken der zweiten Hauptkupplung im Radsatz einzulegen, werden die beiden Gangwechselkupplungen 42, 10 eingerückt. Dazu wird zum einen eine in der folgenden Fig. 3 beschriebene Schaltmuffe 18 axial nach links verschoben. Dadurch ist eine drehfeste Verbindung zwischen den beiden dann gemeinsam gegenüber der Vorgelegewelle 16 rotierbaren Losrädern 14, 15 hergestellt. Ferner wird eine Schaltmuffe 201 der Gangwechselkupplung 42 axial nach rechts verschoben. So dass das Losrad 1st des ersten Vorwärtsganges drehfest mit der unteren Vorgelegewelle 124 gekoppelt ist. Der vom Antriebsmotor kommende Leistungsfluss des Rückwärtsganges Rev. verläuft dann von der zweiten Hauptkupplung über die Hohlwelle 112 auf
- das drehfest auf dieser angeordnete Festrad 114,
- das dem zweiten Vorwärtsgang 2nd zugeordnete Losrad 21, welches mit letzterem Festrad 11 kämmt,
- das dem Rückwärtsgang Rev. zugeordnete Losrad 15, welches mit letzterem Losrad 21 kämmt,
- das dem dritten Vorwärtsgang 3rd zugeordnete Losrad 14, welches mittels der Schaltmuffe 18 drehfest zu letzterem Losrad 15 ist,
- das mittlere Festrad 117 auf der Innenwelle 111, welches mit letzterem Losrad 14 kämmt,
- das rechte Festrad 118 auf der Innenwelle 111, welches drehfest zu letzterem Festrad 117 ist,
- das dem ersten Vorwärtsgang 1st zugeordnete Losrad 131, welches mit letzterem Festrad 118 kämmt,
- das kleine Abtriebsritzel 39, welches mittels der Gangwechselkupplung 42 drehfest zu letzterem Losrad 131 ist,
- das mit dem besagten Abtriebsritzel 39 kämmende Antriebszahnrad 41 des Differentials 7
auf die Radantriebshalbwellen 8, 9 zum Abtrieb auf eine Vorderachse 110.

Fig. 3 zeigt ein Detail aus Fig. 1 mit der Gangwechselkupplung 10 zum Schalten einer Doppel-Losrad-Einheit 11. Auf der selben Vorgelegewelle 16 ist die andere Gangwechselkupplung 13 angeordnet, die einen Gleichlaufring 12 umfasst, mittels dessen das Losrad 14 mit der das Doppel-Losrad-Einheit 11 tragenden Vorgelegewelle 16 drehfest verbindbar ist.

Der Gleichlaufring 12 ist drehfest mit der Vorgelegewelle 16 verbunden. Der Gleichlaufring 12 ist zur Kopplung mit dem von der Doppel-Losrad-Einheit 11 getrennten Losrad 17 vorgesehen. Hierfür ist auf dem Gleichlaufring 12 eine in axialer Richtung verschiebbare Schaltmuffe 24 der Schalteinheit 13 gelagert, mittels der der Gleichlaufring 12 mit dem Losrad 14 des Doppel-Losrad-Einheits 11 und alternativ mit dem Losrad 17 drehfest koppelbar ist. Die Schaltmuffe 24 weist an ihrem Außenumfang eine umlaufende Nut 27 zum Eingriff einer nicht näher dargestellten Schaltgabel oder Schaltschwinge auf.

Die Gangwechselkupplung 10, mittels der die Doppel-Losrad-Einheit 11 schaltbar ist, ist teilweise zwischen den beiden Losrädern 14, 15 der Doppel-Losrad-Einheit 11 und teilweise neben der Doppel-Losrad-Einheit 11 angeordnet. Dabei weist die erste Gangwechselkupplung 10 neben dem Losrad 15 die besagte Schaltmuffe 18 auf. Diese Schaltmuffe 18 ist auf einem Gleichlaufring 20 axial verschiebbar gelagert und ist über diesen drehfest mit der Vorgelegewelle 16 verbunden. Ferner weist die erste Gangwechselkupplung 10 zusätzlich zu der Schaltmuffe 18 eine zweite Schaltmuffe 19 auf. Die Schaltmuffen 18 und 19 sind in axialer Richtung direkt, ohne zwischengeschaltetes Bauteil, gekoppelt und in Umfangsrichtung entkoppelt. Die rechte Schaltmuffe 18 weist hierfür auf der dem Doppel-Losrad-Einheit 11 zugewandten Seite ein angeformtes Ringelement 25 auf, an dessen Innenumfang eine Nut 26 angeformt ist. An die linke Schaltmuffe 19 ist auf der der ersten Schaltmuffe 18 zugewandten Seite an deren Außenumfang ein umlaufender Steg 28 angeformt, der in die Nut 26 der rechten Schaltmuffe 18 in axialer Richtung formschlüssig eingreift.

Die linke Schaltmuffe 19 erstreckt sich ausgehend von der rechten Schaltmuffe 18 durch mehrere umfangsmäßig gleichmäßig verteilte Durchbrüche 29 des Losrades 15 in Richtung des Losrades 14 und ist mit dem Losrad 15 drehfest verbunden. Die Schaltmuffe 19 ist teilweise zwischen den Losrädern 14, 15 der Doppel-Losrad-Einheit 11 und teilweise neben dem Losrad 15 der Doppel-Losrad-Einheit 11 angeordnet.

Die Schaltmuffe 18 weist an ihrem Außenumfang eine Nut 30 zum Eingriff einer nicht näher dargestellten Schaltgabel oder Schaltschwinge auf. Wird die erste Schaltmuffe 18 mittels der Schaltgabel in axialer Richtung zum Doppel-Losrad-Einheit 11 verschoben, wird mit der ersten Schaltmuffe 18 auch die zweite Schaltmuffe 19 verschoben und über die zweite Schaltmuffe 19 wird das Doppel-Losrad-Einheit 11 geschaltet bzw. werden die beiden Losräder 14, 15 der Doppel-Losrad-Einheit 11 direkt über die zweite Schaltmuffe 19 drehfest miteinander gekoppelt. Wie zuvor beschrieben, dient das rechte Losrad 15 der Doppel-Losrad-Einheit 11 zur Drehrichtungsumkehr für einen Rückwärtsgang. Wird die rechte Schaltmuffe 18 mittels der Schaltgabel hingegen axial in die von dem Doppel-Losrad-Einheit 11 abgewandte axiale Richtung verschoben, wird mittels dieser Schaltmuffe 18 das dem sechsten Vorwärtsgang 6th zugeordnete Losrad 31 drehfest mit dem Gleichlaufring 20 und damit mit der Vorgelegewelle 16 drehfest gekoppelt.

In den schematischen Darstellungen gemäß Fig. 1 und 3 sind die Gangwechselkupplungen als ausschließlich formschlüssige Schaltklauenkupplungen dargestellt. Hingegen sind die Gangwechselkupplungen in der konkreteren Darstellung gemäß Fig. 2 als Synchronringe dargestellt. In der Praxis sind sowohl die Ausführung mit Synchronringen als auch mit Schaltklauenkupplungen möglich.

Alternativ zu einer direkten axialen Kopplung der zweiten Schaltmuffe 19 mit der ersten Schaltmuffe 18 wäre auch denkbar, diese mit einer separaten Schaltgabel oder mit einer Doppelschaltgabel zu betätigen. Ferner wäre denkbar, dass die erste Gangwechselkupplung 10 nur eine sich durch das zweite Losrad 15 erstreckende Schaltmuffe aufweist, die über eine Schaltgabel direkt betätigbar ist, und das neben der Doppel-Losrad-Einheit 11 angeordnete Losrad 31 über eine separate Schalteinheit drehfest mit der Vorgelegewelle 16 koppelbar ist, die beispielsweise auch auf einer der Doppel-Losrad-Einheit 11 abgewandten Seite des Losrads 31 angeordnet sein könnte.

Die beiden Abtriebsritzel 39 und 49 müssen nicht den dargestellten Unterschied im Durchmesser aufweisen. In einer alternativen Ausgestaltung können beide Abtriebsritzel den gleichen Durchmesser ausweisen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Doppelkupplungsgetriebe für den Frontantrieb mit zwei koaxial zueinander angeordneten Hauptwellen (111, 112) und zwei parallel zueinander angeordneten Vorgelegewellen (16, 124), wobei der Leistungsfluss des Rückwärtsganges (Rev.) von einem Festrad (114) der ersten Hauptwelle (112) über
- ein drehbar gegenüber der einen Vorgelegewelle (124) angeordnetes Losrad (21) verläuft, welches im Leistungsfluss eines Vorwärtsganges (2nd) drehfest mit dieser einen Vorgelegewelle (124) gekoppelt ist, **dadurch gekennzeichnet daß** der Leistungsfluss der Rückwänksganges weiter über
- zwei drehfest miteinander gekoppelte Losräder (14, 15) der anderen Vorgelegewelle (16),
- zwei unmittelbar benachbarte Festräder (117, 114) der zweiten Hauptwelle (111),
- ein Losrad (131) und ein drehfest mit diesem gekoppeltes Abtriebsritzel (39) der einen Vorgelegewelle (124) und
- ein Differentialzahnrad (41)
verläuft.

2. Doppelkupplungsgetriebe nach Patentanspruch 1, **dadurch gekennzeichnet, dass** die erste Hauptwelle als Hohlwelle (112) und die zweite Hauptwelle als radial teilweise innerhalb dieser Hohlwelle verlaufende Innenwelle (111) ausgeführt ist.

3. Doppelkupplungsgetriebe nach einem der vorhergehenden Patentansprüche, **dadurch gekennzeichnet, dass** beide Vorgelegewellen (16, 124) jeweils ein Abtriebsritzel (40 bzw. 39) aufweisen, wobei die beiden Abtriebsritzel (40, 39) einen unterschiedlichen Durchmesser aufweisen und mit dem Differentialzahlrad (41) kämmen.

4. Doppelkupplungsgetriebe nach einem der vorhergehenden Patentansprüche, **dadurch gekennzeichnet, dass** das Doppelkupplungsgetriebe als Sechs-Gang-Getriebe ausgeführt ist, wobei in einer Zahnradebene des fünften Vorwärtsganges Bauraum für einen siebenten Vorwärtsgang als Getriebealternative nach dem Baukastenprinzip vorgehalten ist.

5. Doppelkupplungsgetriebe nach einem der Patentansprüche 1 bis 3, **dadurch gekennzeichnet, dass** zwei Zahnradebenen jeweils zwei Vorwärtsgängen (7th, 5th bzw. 6th, 4th) zugeordnet sind, wobei eine dieser beiden Zahnradebenen axial vor den beiden besagten Losrädern (14, 15) liegt, wohingegen die andere Zahnradebene axial hinter den beiden besagten Losrädern (14, 15) liegt.

6. Doppelkupplungsgetriebe nach Patentanspruch 5, **dadurch gekennzeichnet, dass** die eine dieser beiden Zahnradebenen dem fünften Vorwärtsgang (5th) und dem siebenten Vorwärtsgang (7th) zugeordnet ist und die andere dieser beiden Zahnradebenen dem sechstem Vorwärtsgang (6th) und dem vierten Vorwärtsgang (4th) zugeordnet ist.

7. Doppelkupplungsgetriebe nach einem der vorhergehenden Patentansprüche, **dadurch gekennzeichnet, dass** die beiden drehfest miteinander gekoppelten Losräder (14, 15) der einen Vorgelegewelle (16) eine Doppel-Losrad-Einheit (11) bilden, die mittels einer axial daneben angeordneten Schaltmuffe (18) koppelbar sind, wobei ein axial an dieser Schaltmuffe (18) abgestütztes Teil (19) durch das der Schaltmuffe (18) näher stehende Losrad (15) hindurch greift und eine Innenverzahnung zur drehfesten Kopplung der beiden Losräder (14, 15) miteinander aufweist.

8. Doppelkupplungsgetriebe nach einem der vorhergehenden Patentansprüche, **dadurch gekennzeichnet, dass** das drehbar gegenüber der einen Vorgelegewelle (124) angeordnetes Losrad (21), welches im Leistungsfluss eines Vorwärtsganges drehfest mit der Vorgelegewelle (124) gekoppelt ist, dem zweiten Vorwärtsgang (2nd) zugeordnet ist.

9. Doppelkupplungsgetriebe nach einem der vorhergehenden Patentansprüche, **dadurch gekennzeichnet, dass** von den beiden drehfest miteinander gekoppelte Losräder (14, 15) der anderen Vorgelegewelle (16) das eine Losrad (14) ausschließlich dem dritten Vorwärtsgang (3rd) und das andere Losrad (15) ausschließlich dem Rückwärtsgang zugeordnet ist.

10. Doppelkupplungsgetriebe nach einem der vorhergehenden Patentansprüche, **dadurch gekennzeichnet, dass** der Rückwärtsgang (Rev.) und der erste Vorwärtsgang (1st) jeweils einer anderen Hauptkupplung der Doppelkupplung zugeordnet sind.

## Claims

1. Twin-clutch gearbox for front drive, comprising two coaxially arranged main shafts (111, 112) and two parallel layshafts (16, 124), wherein the power flow of the reverse gear (rev) is routed from a fixed gear (114) of the first main shaft (112) via
- an idler gear (21) rotatable relative to the one layshaft (124), which in the power flow of a forward gear (2^{nd}) is non-rotatably coupled to this layshaft (124), **characterised in that** the power flow of the reverse gear is further routed via
- two idler gears (14, 15) of the other layshaft (16), which are non-rotatably coupled to each other,
- two immediately adjacent fixed gears (117, 114) of the second main shaft (111),
- an idler gear (131) and a drive pinion (39) of the one layshaft (124) which is non-rotatably coupled thereto, and
- a differential gear (41).

2. Twin-clutch gearbox according to patent claim 1, **characterised in that** the first main shaft is designed as a hollow shaft (112) and the second main shaft is designed as an inner shaft (111) which partially runs radially inside this hollow shaft.

3. Twin-clutch gearbox according to any of the preceding patent claims, **characterised in that** each of the layshafts (16,124) is provided with a drive pinion (40 or 39 respectively), the two drive pinions (40, 39) having different diameters and meshing with the differential gear (41).

4. Twin-clutch gearbox according to any of the preceding patent claims, **characterised in that** the twin-clutch gearbox is a six-speed gearbox, a space for a seventh forward gear being provided in a gear plane of the fifth forward gear as an alternative in accordance with the modular principle.

5. Twin-clutch gearbox according to any of patent claims 1 to 3, **characterised in that** each of two gear planes is assigned to two forward gears (7^{th}, 5^{th} and 6^{th}, 4^{th} respectively), wherein one of these two gear planes lies axially in front of the said two idler gears (14, 15) while the other gear plane lies axially behind the said two idler gears (14, 15).

6. Twin-clutch gearbox according to patent claim 5, **characterised in that** one of these two gear planes is assigned to the fifth forward gear (5^{th}) and the seventh forward gear (7^{th}) while the other of these two gear planes is assigned to the sixth forward gear (6^{th}) and the fourth forward gear (4^{th}).

7. Twin-clutch gearbox according to any of the preceding patent claims, **characterised in that** the two non-rotatably coupled idler gears (14, 15) of the one layshaft (16) form a twin-idler unit (11) which can be coupled by means of a selector sleeve (18) disposed axially adjacent, wherein a part (19) axially supported on this selector sleeve (18) extends through the idler gear (15) which is closer to the selector sleeve (18) and has an internal toothing for the non-rotatable mutual coupling of the two idler gears (14, 15).

8. Twin-clutch gearbox according to any of the preceding patent claims, **characterised in that** the idler gear (21) which is mounted rotatably with respect to the one layshaft (124), which is non-rotatably coupled to the layshaft (124) in the power flow of a forward gear, is assigned to the second forward gear (2^{nd})_{.}

9. Twin-clutch gearbox according to any of the preceding patent claims, **characterised in that**, of the two non-rotatably coupled idler gears (14, 15) of the other layshaft (16), the one idler gear (14) is exclusively assigned to the third forward gear (3^{rd}) while the other idler gear (15) is exclusively assigned to the reverse gear.

10. Twin-clutch gearbox according to any of the preceding patent claims, **characterised in that** the reverse gear (rev) and the first forward gear (1^{st}) are assigned to different main clutches of the twin-clutch.

## Revendications

1. Boîte de vitesses à double embrayage pour la traction avant avec deux arbres principaux (111, 112) montés coaxialement entre eux et deux arbres intermédiaires (16, 124) montés en parallèle, le flux de puissance de la marche arrière (Rev.) s'étendant d'une roue fixe (114) du premier arbre principal (112) par
- un pignon fou disposé rotatif par rapport à l'un des arbres intermédiaires (124), qui est solidaire en rotation dans le flux de puissance d'une marche avant (2nd) avec l'un de ces arbres intermédiaires (124), **caractérisée en ce que** le flux de puissance de la marche arrière continue de s'étendre par
- deux pignons fous (14, 15) solidaires en rotation de l'autre arbre intermédiaire (16),
- deux pignons fixes (117, 114) directement voisins du second arbre principal (111),
- un pignon fou (131) et un pignon de sortie (39) solidaire en rotation avec celui-ci de l'un des arbres intermédiaires (124), et
- une couronne de différentiel (41)

2. Boîte de vitesses à double embrayage selon la revendication 1, **caractérisée en ce que** le premier arbre principal est conçu comme un arbre creux (112) et le second arbre principal comme un arbre intérieur (111) s'étendant radialement en partie à l'intérieur de l'arbre creux.

3. Boîte de vitesses à double embrayage selon l'une quelconque des revendications précédentes, **caractérisée en ce que** les deux arbres intermédiaires (16, 124) présentent chacun un pignon de sortie (40 ou 39), les deux pignons de sortie (40, 39) présentant un diamètre différent et s'engrenant dans la couronne de différentiel (41).

4. Boîte de vitesses à double embrayage selon l'une quelconque des revendications précédentes, **caractérisée en ce que** la boîte de vitesses à double embrayage est conçue comme une boîte six rapports, dans un plan de pignons du cinquième rapport, un encombrement est disponible pour un septième rapport comme alternative de boîte de vitesses selon le principe de modularité.

5. Boîte de vitesses à double embrayage selon l'une quelconque des revendications 1 à 3, **caractérisée en ce que** les deux plans de pignons sont chacun associés à deux rapports (7th, 5th ou 6th, 4th), l'un de ces deux plans de pignons est disposé axialement devant les deux pignons fous (14, 15) susmentionnés tandis que l'autre plan de pignons est disposé axialement derrière les deux pignons fous (14, 15) susmentionnés.

6. Boîte de vitesses à double embrayage selon la revendication 5, **caractérisée en ce que** l'un de ces deux plans de pignons est associé au cinquième rapport (5th) et au septième rapport (7th) et l'autre plan de pignons est associé au sixième rapport (th) et au quatrième rapport (4th).

7. Boîte de vitesses à double embrayage selon l'une quelconque des revendications précédentes, **caractérisée en ce que** les deux pignons fous (14, 15) solidaires en rotation de l'un des arbres intermédiaires (16) forment une double unité de pignons fous (11) qui au moyen d'un manchon de changement de vitesse (18) disposé axialement à proximité de celle-ci, peuvent être couplés, une partie (19) s'appuyant axialement sur ce manchon (18) de changement de vitesse s'étend au travers du pignon fou (15) se trouvant le plus près du manchon (18) de changement de vitesse et présente une denture intérieure pour permettre un accouplement solidaire en rotation des deux pignons fous (14, 15).

8. Boîte de vitesses à double embrayage selon l'une quelconque des revendications précédentes, **caractérisée en ce que** le pignon fou (21) monté rotatif par rapport à l'un des arbres intermédiaire (124), qui est solidaire en rotation avec un arbre intermédiaire (124) dans le flux de puissance d'une marche avant, est associé au deuxième rapport (2nd).

9. Boîte de vitesses à double embrayage selon l'une quelconque des revendications précédentes, **caractérisée en ce que** des deux pignons fous (14, 15) de l'autre arbre de renvoi (16), montés en rotation, un pignon fou (14) est exclusivement associé au troisième rapport (3rd) et l'autre pignon fou (15) est exclusivement associé à la marche arrière.

10. Boîte de vitesses à double embrayage selon l'une quelconque des revendications précédentes, **caractérisée en ce que** la marche arrière (Rev.) et le premier rapport (1 st) sont associés chacun à un autre embrayage principal du double embrayage.
